# EUROPÄISCHE PATENTANMELDUNG

(11) **EP 1 391 817 A2**
(43) Veröffentlichungstag der Anmeldung: **25.02.2004**
(21) Anmeldenummer: 03013887.9
(22) Anmeldetag: 20.06.2003
(51) Int. Cl.: G06F 9/44

(54) **Verfahren zum sprachgesteuerten Zugriff auf Informationen unter Berücksichtigung inhaltlicher Beziehungen**

(30) Priorität: 21.08.2002 DE 10239172
(71) Anmelder: Deutsche Telekom AG, 53113 Bonn (DE)
(72) Erfinder: Fischer, Kyrill Alexander, Dr. rer. nat., 64347 Griesheim (DE)

(57) **Zusammenfassung**

Bei der Erfindung handelt es sich um ein Verfahren zum sprachdialoggesteuerten, schrittweisen, inhaltsbezogenen Heranführen an die gesuchte Information, indem zu den vom Nutzer vorgegebenen Suchbegriffen vom System jeweils weitere dazu passende, die Suche ggf. einschränkende oder in eine inhaltlich passende weiterführende Richtung leitende Begriffe vorgeschlagen werden, deren Auswahl durch den Nutzer zu der gesuchten Information führen.

## Beschreibung

Die Erfindung betrifft ein Verfahren zum sprachgesteuerten Zugriff auf Informationen, das die inhaltlichen Beziehungen zwischen den Informationen berücksichtigt. Die Erfindung betrifft insbesondere eine akustische, dialogorientierte Suche in semantisch erschließbaren Informationsmengen, insbesondere in Wissensnetzen.

### Gebiet der Erfindung:

Für den computerunterstützten Zugriff auf Informationen stehen vielfältige Möglichkeiten zur Verfügung. Unter anderem stehen neben Internet/WWW-basierten Lösungen, bei denen ein WWW-Browser zum Einsatz kommt, auch sprachbasierte Systeme zur Verfügung, bei denen die Informationen akustisch übermittelt werden.

Web-basierte Browser-Lösungen sind in der Lage, sowohl während der Suche nach der gewünschten Information, als auch für die Darstellung dieser Information, geschriebenen Text und graphische Darstellungen einzusetzen. Hierfür ist der Zugang zum Informationsanbieter (z. B. über Internet) und die Möglichkeit der visuellen Darstellung von Text und ggf. von Graphik notwendig. Der Informationsanbieter seinerseits hat dabei Zugriff auf die zu suchenden Dokumente bzw. entsprechende Verweise darauf.

Sprachsysteme dagegen verwenden als Ein- und Ausgabemedium akustische Signale, insbesondere Sprachkommandos als Eingabe und aufgenommene oder synthetisierte Sprache für die Ausgabe. Für sprachbasierte Informationssysteme ist der Zugang zum Informationssystem z. B. über Telefon möglich, so dass es für mobile Einsatzfälle in Frage kommt. Eine graphische Darstellung ist hierbei im allgemeinen nicht oder nur sehr eingeschränkt möglich.

Es gibt Informationsanbieter, die einen Zugang sowohl über WWW-Browser, als auch über Sprache ermöglichen. In diesem Fall ist die erreichbare Information im allgemeinen aus der gleichen, dem Informationsanbieter zur Verfügung stehenden Informationsmenge entnommen, und wird für die verschiedenen Zugangswege im allgemeinen verschieden aufbereitet.

Die Inhalte (Informationen), die auf diese Weise zugänglich gemacht werden, sind sehr vielfältig. Sie können dabei sowohl von öffentlichem Interesse sein (Informationen über Veranstaltungen, Verkehrsinformationen, Nachrichten, Fahrpläne, etc.) oder aber auch für eine geschlossene Benutzergruppe (z. B. Außendienstmitarbeiter einzelner Institutionen und Unternehmen, Mitglieder bestimmter Berufsverbände, etc.) angeboten werden.

Die Information wird dabei im allgemeinen für den Zugriff entweder speziell angelegt, oder es wird ausgehend von einer bestehenden Informationsmenge eine spezifische Aufbereitung durchgeführt, die den Zugriff auf die zugrundeliegende Information unterstützt bzw. ermöglicht. Beispiele hierfür sind z. B. die (möglicherweise automatische) redaktionelle und formale Aufarbeitung von bestehenden Dokumenten, die in ein für die Darstellung geeignetes Format gebracht werden, oder die Verknüpfung und Strukturierung der bestehenden Information in thematische Gebiete.

Die Suche nach bestimmten Informationen erfolgt beim Einsatz von WWW-Browsern im allgemeinen über die Vorgabe von einem oder mehreren Suchbegriffen. Als Antwort auf eine Suchanfrage wird dann im allgemeinen eine Liste ("Trefferliste") von zu den vorgegebenen Suchbegriffen passenden Informationen geliefert. Diese Liste ist häufig sortiert, so dass das Ausmaß, in dem die referenzierte Information zu den vorgegebenen Begriffen passt, berücksichtigt wird.

Neben der Angabe einer expliziten Liste einzelner Verweise auf möglicherweise relevante Dokumente (Informationen) existieren auch Systeme, die bei WWW-Browsern, die eine graphische Darstellung unterstützen, eine abstrakte graphische Darstellung der gesuchten Informationen (und ggf. ihrer Beziehung zu den Suchbegriffen) ermöglichen. Hierbei wird das Ziel verfolgt, den inhaltlichen Zusammenhang aller verfügbaren Dokumente (bzw. einer Untermenge davon) auf einer niedrigdimensionalen Darstellung (d.h. i. allg. in einer zwei- oder dreidimensionalen Darstellung) wiederzugeben. Einzelne Punkte innerhalb der abstrakten graphischen (i. allg. zwei- oder dreidimensionalen) Darstellung bezeichnen dabei einzelne Dokumente (Informationen) oder Gruppen davon. Diese Darstellung, die man als "thematische Landkarten" bezeichnen könnte, haben die Eigenschaft, dass dichter beieinander liegende Punkte auf der "Karte" im allgemeinen inhaltlich oder thematisch ähnlichere Dokumente (Informationen) referenzieren, als solche Punkte, die in der abstrakten graphischen Darstellung weiter voneinander entfernt sind.

### Stand der Technik (SdT):

Bei der Abfrage von Informationen bestehen für WWW-Browser-Systeme, die eine übersichtliche textuelle und möglicherweise auch graphische Darstellung unterstützen, die oben geschilderten Zugriffsmöglichkeiten. Damit ist bei diesen Systemen auch eine iterative Suche, die in mehreren Schritten zu einer spezifischen, gewünschten Information führt, möglich und in einer benutzerfreundlichen Weise realisierbar.

Eine ähnliche Suchmöglichkeit besteht für automatische Sprachdialogsysteme nicht. Zwar ist technisch die Realisierung eines Dialoges, bei dem Suchbegriffe abgefragt und über Spracherkennung erkannt werden, möglich. Auch ist die Wiedergabe einer Liste von Verweisen auf Informationen über eine synthetisierte Stimme möglich. Häufig jedoch hat diese Darstellung Eigenschaften, die eine weitere Bearbeitung dieser Liste bzw. der darin gezeigten Information in Form eines Dialoges erschwert oder nicht ermöglicht.

Aufgabe der Erfindung ist es, eine sprachdialogbasierte Suche nach Informationen zu realisieren, die schnell zum Ziel führt und effizient gestaltet ist.

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet.

In der allgemeinen Betrachtung handelt es sich um ein sprachdialoggesteuertes, schrittweises, inhaltsbezogenes Heranführen an die gesuchte Information, indem zu den vom Nutzer vorgegebenen Suchbegriffen vom System jeweils weitere dazu passende, die Suche ggf. einschränkende oder in eine inhaltlich passende weiterführende Richtung leitende Begriffe vorgeschlagen werden, deren Auswahl durch den Nutzer zu der gesuchten Information führen. Bei dieser Suche werden während der gesamten Dauer des Dialoges und der Suche nach der gewünschten Information stets die folgenden Aspekte berücksichtigt:
· Unterstützung der Suche durch thematische/inhaltsbezogene Hinweise für die weitere Suche,
· leicht zu behaltende Übersicht über die Liste der weiterführenden Verweise.

Dies wird dadurch erreicht, dass bei der akustischen, sprachbasierten Suche nach Informationen eine abstrakte interne Darstellung der verfügbaren, in Frage kommenden Informationsmenge oder einer Untermenge davon berücksichtigt wird, die die thematische/inhaltliche Beziehung dieser Menge untereinander und zu den Suchbegriffen quantifiziert und die Identifikation von thematisch/inhaltlich zueinander passenden Dokumenten bzw. Informationen ermöglicht. Hierbei könnten z. B. die o.g. "thematischen Landkarten" Verwendung finden.

Die Suche nach einer bestimmten Information erfolgt dann über einen Dialog, bei dem schrittweise weitere, zu den ursprünglichen Suchbegriffen passende Verweise angeboten werden und die vom Benutzer jeweils ausgewählten Verweise weiter verfolgt werden.

Dadurch wird es möglich, ausgehend von den vorgegebenen Suchbegriffen, in jedem Dialogschritt jeweils eine überschaubare Anzahl von nicht zu vielen und gleichzeitig thematisch/inhaltlich dazu passenden, weiterführenden Informationen zu identifizieren. So kann ein "Weitersuchen" ermöglicht und sinnvoll unterstützt werden, wobei das Weitersuchen durch die jeweilige, vom Benutzer getroffene Auswahl, entweder im Sinne einer zunehmenden thematischen Eingrenzung erfolgt, oder von einem Thema schrittweise über jeweils thematisch/inhaltlich benachbarte Themen zu neuen Aspekten oder Themen führt ("Stöbern"). Dies ist möglich, weil die vorgegebenen oder im Laufe des bisherigen Dialoges identifizierten (ggf. zusätzlichen) Suchbegriffe durch die eingeführte abstrakte interne Darstellung der thematischen Zusammenhänge die Identifikation von damit jeweils inhaltlich in Zusammenhang stehenden weiteren Suchbegriffen und Informationen ermöglicht (im Falle der "thematischen Karte" sind dies z. B. die Nachbarschaftspunkte von den Punkten, die jeweils die einzelnen oder jeweils eine Kombination von mehreren vorgegebenen Stichwörtern repräsentieren).

In einer weiteren Ausführungsform werden verschiedene Kontexte untersucht. Zu einzelnen Stichwörtern bestehen oft mehrere Informationen, da viele Stichwörter im allgemeinen in verschiedenen Kontexten verwendet werden. Durch die interne abstrakte Darstellung, die es erlaubt, das Ausmaß der thematischen Beziehungen zwischen den Dokumenten untereinander und zu den Stichwörtern zu quantifizieren, ist es im allgemeinen nicht nur möglich, thematisch sinnvolle weiterführende Suchstichwörter zu identifizieren, sondern auch, sie so auszuwählen, dass sie zu den verschiedenen thematisch möglichen, sich gegenseitig allerdings ausschließenden Kontexten passen. Dies ermöglicht es für den Benutzer, die Suche nach gewünschter Information zu erleichtern, denn die dem Benutzer angebotenen weiteren Suchrichtungen helfen bereits, zwischen verschiedenen Kontexten des gleichen Begriffes zu unterscheiden. Im Falle der "thematischen Karten" entsprechen diese verschiedenen Kontexte unter gewissen Umständen z. B. verschiedenen Nachbarschaftsrichtungen, aus denen die weiteren Suchbegriffe abgeleitet werden.

So kann z. B. der Suchbegriff "Filter" innerhalb eines sprachbasierten Informationssystems in vielen verschiedenen Kontexten auftreten. Es ist im Sinne des Suchens spezifischer Information hilfreich, wenn das System durch die beschriebene Methode in der Lage ist, möglichst gut unterscheidende weiterführende Vorschläge zu unterbreiten, die im beschriebenen Beispiel z. B. "optische Filter", "Flüssigkeitsfilter", "akustische Filter", "Realisierung von Filtern" etc. lauten könnten.

In weiteren Ausführungsformen sind Interaktionsmöglichkeiten gegeben, so dass während der Durchführung des Dialoges unter anderem auch die folgenden Möglichkeiten bestehen:
· einen oder mehrere Suchschritte zurück zu gehen,
· eigene, vom System nicht vorgeschlagene Suchbegriffe einzuführen, oder
· die Suche neu zu starten.

So lässt sich eine "iterative Suche" in einer für den Benutzer inhaltlich leicht nachvollziehbaren Weise realisieren.

Die während oder nach Abschluss des Suchdialogs identifizierten Informationen können dem Benutzer auf verschiedene Weise zugänglich gemacht werden (z. B. direktes, teilweises oder vollständiges Vorlesen der gefundenen Informationen, Zusenden per e-Mail oder Fax, etc.).

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

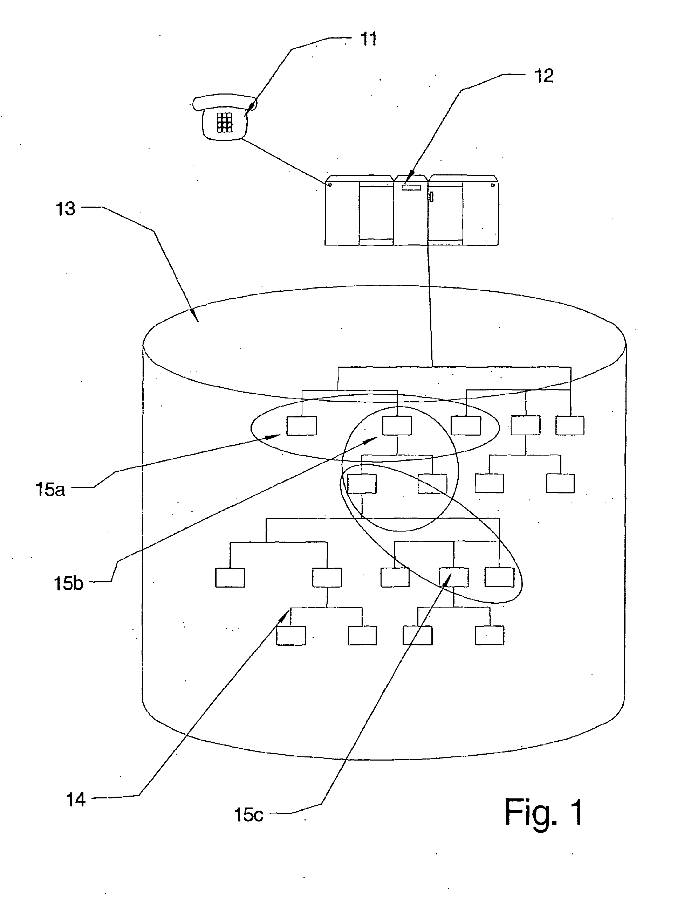

- Fig. 1: einen Server, der über ein Telefon auf eine semantisch erschließbare Informationsmenge, insbesondere ein Wissensnetz, zugreifen kann.

Im Rahmen der Erfindung sind zahlreiche Abwandlungen und Weiterbildungen der beschriebenen Ausführungsbeispiele verwirklichbar.

Die Figur 1 zeigt einen Server 12, der mit einem Telefon 11 verbunden ist. Auf dem Server 12 läuft eine Software, die Sprachinformationen interpretieren kann. Der Server ist mit einem Speichersystem 13 verbunden, in dem eine semantisch erschließbare Informationsmenge 14, insbesondere ein Wissensnetz, abgelegt ist. Die Bezugszeichen 15a bis 15c zeigen die iterative Suche im Netzwerk. Bei der ersten Suche werden drei Elemente auf gleicher Ebene bereitgestellt. Danach geht die Suche in die Tiefe und stellt letztlich in 15c das gesuchte Ergebnis bereit.

### Bezugszeichen

- 11: Telefon
- 12: Server
- 13: Speicher
- 14: Netzwerk
- 15: a-c iterative Suchergebnisse

### Literaturliste zum Stand der Technik:

[1]Kohonen, T. et al.: "Self organization of a massive document collection", IEEE Trans. on Neural Networks, Vol. 11, No. 3, May 2000
[2]Knowledge Computing Corporation: "Technology White Paper"; www.knowledgecc.com/tech2.htm
[3]Choi, J. et al. "SCAN - Speech Content based Audio Navigator: A System Overview", AT&T Labs - Research
[4]http://www.cybergeography.org/atlas/info_landscapes.html
[5]http://www.i-views.de

## Patentansprüche

1. Verfahren zum sprachgesteuerten Zugriff auf Informationen, das die inhaltlichen Beziehungen zwischen den Informationen berücksichtigt, wobei eine interne Darstellung der verfügbaren, in Frage kommenden Informationsmenge, in der die gesuchten Information aufgefunden werden soll, dergestalt verwendet wird, dass das Ausmaß der thematischen/inhaltlichen Beziehung der in Frage kommenden Informationen sowohl untereinander als auch zu den Suchbegriffen quantifiziert wird und als Grundlage für die Steuerung des Dialoges mit verwendet wird.

2. Verfahren zum sprachgesteuerten Zugriff auf Informationen, mit folgenden Schritten:
- Aufnahme von Sprachinformationen und Interpretation der Sprachinformationen, wobei vorzugsweise eine Spracherkennung eingesetzt wird,
- Übergabe der interpretierten Sprachinformationen an ein Suchsystem, das auf einer semantisch erschließbaren Informationsmenge, insbesondere auf einem Wissensnetz, basiert, in dem die Daten nach syntaktischen, semantischen und Kontext-Kriterien miteinander verknüpfbar sind, wobei das Suchsystem die semantisch erschließbare Informationsmenge, insbesondere ein Wissensnetz, nach Informationen durchsucht, die in einer bestimmbaren Umgebung der Sprachinformationen angeordnet sind,
- akustische Ausgabe von gefundenen Informationen, wobei die ausgegebenen gefundenen Informationen zur erneuten Suche nach dem vorhergehenden Schritt erneut auswählbar und/oder erneut eingebbar sind.

3. Verfahren nach einem oder mehreren der vorhergehenden Ansprüche, bei dem das Auffinden einer gesuchten Information schrittweise in Form eines Dialoges erfolgt, bei dem ausgehend von einem oder mehreren vorgegebenen Sprachinformationen, dass zu diesen Sprachinformationen thematisch/inhaltlich passende, weiterführende Informationen zur Auswahl vorgeschlagen werden.

4. Verfahren nach einem oder mehreren der vorhergehenden Ansprüche, bei dem die Ein- und Ausgabe nicht nur über Sprache, sondern alternativ oder ergänzend über visuelle Darstellung und/oder Interaktion über Text oder Graphik erfolgt.

5. Verfahren nach einem oder mehreren der vorhergehenden Ansprüche, **dadurch gekennzeichnet, dass** eine Relevanz, insbesondere die Nähe, der Beziehungen zwischen den Suchinformationen und den gefunden Informationen durch:
- eine Reihenfolge,
- eine explizite Angabe als Wert,
- eine akustische Unterstützung unter Verwendung, der Tonhöhe, einer Stimme, eines oder mehrerer Hintergrundsignale und/oder akustischer Effekte, insbesondere Veränderung der Grundfrequenz, Echo, Nachhall.

6. Verfahren nach einem oder mehreren der vorhergehenden Ansprüche, **dadurch gekennzeichnet, dass** die gefundene Information, insbesondere Dokumente, teilweise oder vollständig vorgelesen oder per e-Mail oder Fax zugesendet wird.

7. Software für ein Computersystem, das Schnittstellen zu einem Sprachsystem aufweist, **dadurch gekennzeichnet, dass** ein Verfahren nach einem oder mehreren der vorhergehenden Ansprüche implementiert ist.

8. Datenträger für einen Computer, **gekennzeichnet durch** die Speicherung einer Software nach dem vorhergehenden Softwareanspruch.

9. Computersystem, **gekennzeichnet durch** eine Einrichtung, die den Ablauf eines Verfahrens nach einem oder mehreren der vorhergehenden Verfahrensansprüche erlaubt.

10. Computersystem, **gekennzeichnet durch** eine Einrichtung, die den Ablauf eines Verfahrens nach einem oder mehreren der vorhergehenden Verfahrensansprüche erlaubt.

11. Vorrichtung zum sprachgesteuerten Zugriff auf Informationen, mit
- Aufnahmemitteln, zur Aufnahme von Sprachinformationen und Interpretation der Sprachinformationen, wobei vorzugsweise eine Spracherkennung eingesetzt wird,
- Speichermitteln zur Speicherung von Informationen einer semantisch erschließbaren Informationsmenge, insbesondere eines Wissensnetzes, indem syntaktische, semantische und Kontext-Kriterien miteinander verknüpfbar sind, und mit Suchmitteln, die nach den interpretierten Sprachinformationen in der semantisch erschließbaren Informationsmenge, insbesondere im Wissensnetz suchen, wobei nur die Informationen berücksichtigt werden, die in einer bestimmbaren Umgebung der interpretierten Sprachinformationen angeordnet sind,
- mit Mitteln zur akustischen Ausgabe von gefundenen Informationen, wobei über das Aufnahmemittel die ausgegebenen gefundenen Informationen zur erneuten Suche nach dem vorhergehenden Schritt erneut auswählbar und/oder erneut eingebbar sind.
